# EUROPEAN PATENT SPECIFICATION

(11) **EP 2 812 614 B1**
(45) Date of publication and mention of the grant of the patent: **26.10.2022**
(21) Application number: 13705520.8
(22) Date of filing: 01.02.2013
(51) Int. Cl.: F16J 15/08, F01N 13/00, B60R 13/08, F01N 13/10, F01N 13/14

(54) **SEALING ELEMENT AND HEAT INSULATION BOX**
DICHTELEMENT UND WÄRMEISOLIERBOX
ÉLÉMENT D'ÉTANCHÉITÉ ET BOÎTE CALORIFUGE

(30) Priority: 07.02.2012 FI 20125133
(43) Date of publication of application: 17.12.2014
(73) Proprietor: Wärtsilä Finland Oy, 65170 Vaasa (FI)
(72) Inventor: NYNÄS, Håkan, FI-65280 Vasa (FI)
(74) Representative: Berggren Oy
(86) International application number: PCT/FI2013/050114
(87) International publication number: WO 2013/117808

(56) References cited:
- EP-A2- 0 943 847
- EP-A2- 2 551 562
- WO-A1-2005/085685
- DE-A1-102007 062 681
- GB-A- 2 038 961
- US-A- 4 353 560
- US-A- 5 553 437

## Description

### Technical field of the invention

The present invention relates to a sealing element for preventing heat radiation through gaps between heat insulation panels, as defined in the preamble of claim 1. The invention also concerns a heat insulation box for an internal combustion engine or for a part of the exhaust system of such engine, as defined in the preamble of the other independent claim.

### Background of the invention

Exhaust manifolds of large internal combustion engines, such as ship engines, are often arranged inside insulation boxes to prevent heat radiation and conduction from the hot parts to the engine room. The insulation boxes can be made of insulation panels, which comprise insulation material that is arranged between a pair of metal sheets. Heat radiation from the exhaust ducts causes buckling of the insulation panels, and gaps are often formed between the insulation panels. Heat leakage from the insulation box is a danger for the engine operator and causes a risk of fire if there is any combustible material nearby. In some constructions, lip seals are integrated into the insulation panels. This reduces heat leakages but makes the elements more complex and expensive.

EP 0943847 A2 discloses a longitudinal seal for sealing a gap between adjacent liner panels. The seal comprises a folded strip of a metal alloy and it allows relative movements and misalignments between adjacent structures.

Other sealing elements are disclosed e. g. in GB 2 038 961 A and in DE 10 2007 062681 A1.

### Summary of the invention

An object of the present invention is to provide a sealing element for preventing heat radiation through gaps between heat insulation panels and to reduce thus heat leakage problems of heat insulation boxes. The characterizing features of the sealing element according to the present invention are given in the characterizing part of claim 1. Another object of the invention is to provide an improved heat insulation box for an internal combustion engine or for a part of the exhaust system of such engine, as defined in the characterizing part of the other independent claim.

A sealing element according to the present invention is made of a single piece of metal or metal alloy, and comprises a first elongated plate section having a longitudinal direction and a first edge and a second edge, said first and second edges extending in said longitudinal direction, a second elongated plate section facing the first plate section and having a longitudinal direction parallel to the longitudinal direction of the first elongated plate section and a first edge and a second edge, said first and second edges extending in said longitudinal direction, a first edging that is arranged on the first edge of the first plate section and points away from the second plate section, a second edging that is arranged on the first edge of the second plate section and points away from the first plate section, and a third edging that is arranged on the second edge of the first plate section on the same side as the first edging and points away from the second plate section. The second edge of the second plate section is connected to the second edge of the first plate section via the third edging, and the edgings are configured to work as springs that clamp the sealing element to an insulation panel. At least the first edging and the second edging are inclined towards a longitudinal center line of the first or the second plate section that extends in the longitudinal direction.

A heat insulation box according to the invention comprises a plurality of heat insulation panels and at least part of the joints between adjacent insulation panels are provided with a sealing element defined above.

With a sealing element according to the invention, direct heat radiation from the insulation box is prevented. Also gas leakages can be reduced. The sealing elements can be made in continuous lengths and cut at the assembly site, or alternatively, the sealing elements can be pre-cut to the right lengths. The sealing element can also be used as a retrofit part in some existing insulation box designs. Cost reductions can be achieved compared to prior art insulation panels with overlapping lip seals or stepped labyrinth seals. The sealing elements are easy to assemble as they grab to the insulation panels and hold them together. With inclined edgings the sealing elements are attached firmly to the insulation panels.

The sealing element can be made of a single metal sheet. The sealing element can also comprise a fourth edging that is arranged on a second edge of the second plate section on the same side as the second edging. The fourth edging can be connected to the third edging with a triangle shaped bending.

According to another embodiment of the invention, the edgings extend over the whole length of the sealing element. This ensures good sealing.

According to an embodiment of the invention, in the heat insulation box at least some of the joints are secured with screws or bolts. This is practical especially with the end plates of the insulation box.

### Brief description of the drawings

Fig. la shows part of an insulation box according to the invention.
Fig. 1b shows a sealing element according to an embodiment of the invention.
Fig. 1c shows a sealing element according to another embodiment of the invention.
Fig. 2 shows the sealing element of Fig. 1c from another angle.
Fig. 3 shows a sealing element for insulation panels that are in a different angle than 90° or 180° in relation to each other.
Fig. 4 shows an alternative for the sealing element of Fig. 3.

### Detailed description of the invention

Embodiments of the invention are now described in more detail with reference to the accompanying drawings.

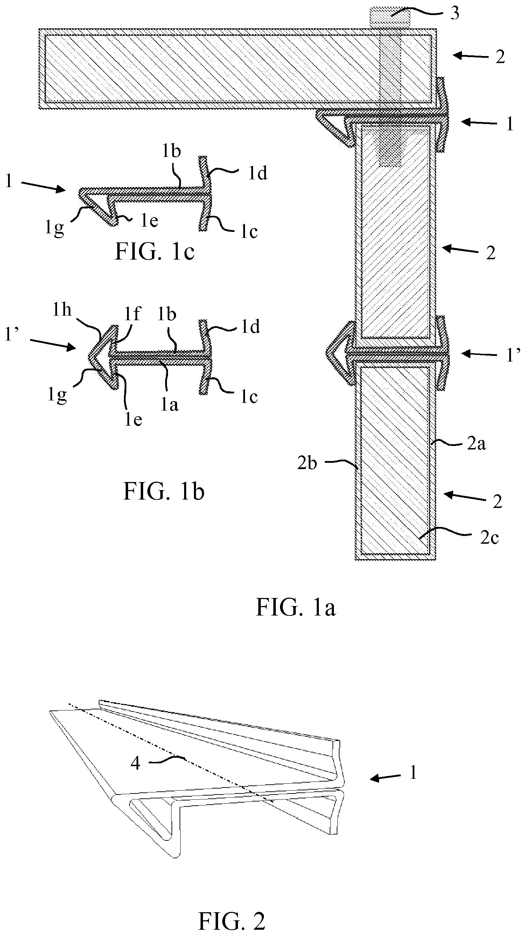

In figure 1a is shown part of an insulation box that can be arranged around an exhaust manifold of an internal combustion engine for reducing heat radiation from the exhaust system of the engine to the engine room. However, the insulation box can also be used in connection with many other applications. For instance, it can be used around furnaces or around pipes that convey superheated steam. If the insulation box is used in connection with an engine, the engine can be a large internal combustion engine, such as a main or an auxiliary engine of a ship or an engine that is used at a power plant for producing electricity, but the engine can also be a smaller engine. The insulation box comprises a plurality of heat insulation panels 2. Each insulation panel 2 comprises a front plate 2a, which is arranged on the outer side of the insulation panel 2, and a rear plate 2b, which is arranged on the inner side of the insulation panel 2. The front plate 2a and the rear plate 2b are made of sheet metal or other similar material. Suitable materials for the front and the rear plates 2a, 2b are, for instance, steel or aluminum. The material of the front and the rear plates 2a, 2b can be the same or, alternatively, different materials can be used on different sides of the insulation panels 2. The edges of the front plate 2a and/or the rear plate 2b can be bent for covering the ends of the insulation panels. The space between the front plate 2a and the rear plate 2b is filled with a suitable incombustible insulation material 2c, which prevents heat radiation and conduction from the exhaust system or other heat source to the engine room or other space that needs to be protected from the heat.

When the insulation box is assembled from the insulation panels 2, small gaps are formed between the adjacent panels 2. In the course of time, the heat from the engine or other heat source causes buckling of the insulation panels 2, and gradually the gaps between the insulation panels 2 grow. Heat radiation through the gaps results from the growing gaps, and this causes danger to the engine operators and a risk of fire in the engine room. Also gases can leak from the insulation box through the gaps. To prevent direct heat radiation from the insulation box to the engine room and for reducing gas leakage, the insulation box is provided with sealing elements 1, 1' that are arranged between the insulation panels 2.

Sealing elements 1, 1' according to embodiments of the invention are shown in figures 1b and 1c. A sealing element 1, 1' comprises a first elongated plate section 1a, and a second elongated plate section 1b facing the first plate section 1a. The second plate section 1b is thus arranged in parallel with the first plate section 1a so that there is a small gap between those surfaces of the first and the second plate sections 1a, 1b that face each other. The sealing element 1, 1' further comprises a first edging 1c, which is arranged on a first edge of the first plate section 1a. The first edging 1c points away from the second plate section 1b. A second edging Id is arranged on a first edge of the second plate section 1b and points away from the first plate section 1a. A third edging 1e is arranged on a second edge of the first plate section 1a on the same side as the first edging 1c. The third edging 1e thus points away from the second plate section. The second plate section 1b is connected to the first plate section 1b through the third edging 1e. The sealing element 1, 1' is thus made of a single piece of material. In the embodiment of the figures, the sealing element 1, 1' is made of a single metal sheet. The material of the sealing element 1, 1' is steel, such as stainless steel, or aluminum or some other suitable metal or alloy. The sealing element 1, 1' can be manufactured, for instance, by rolling sheet metal that is delivered on coils through two or several profiled rolls. The continuous profile can then be pre-cut to the needed lengths, or alternatively it can be cut at the assembly site.

The insulation box of figure 1a is provided with two types of sealing elements 1, 1'. The first type 1 of sealing elements 1, 1' is provided with three edgings 1c, 1d, 1e. The third edging 1e is connected to the second plate section 1b with a bending 1g. The first type 1 of sealing elements 1, 1' can be used between a regular insulation panel 2 and an end panel 2 of the insulation box. The end panels 2 of the insulation box can be attached to the adjacent insulation panels 2 for instance with bolts 3 or screws to secure the connection between the adjacent plates 2. The second type 1' of sealing elements 1, 1' is provided with an additional fourth edging If. The fourth edging If is arranged on a second edge of the second plate section 1b on the same side as the second edging Id. The fourth edging If thus points away from the first plate section 1a. The fourth edging If is connected to the third edging 1e with a triangle shaped bending 1g, 1h, which consists of a first bending 1g and a second bending 1h. In both types of sealing elements 1, 1', each of the edgings 1c, 1d, 1e, 1f is inclined towards the longitudinal center line 4 of the first or the second plate section 1a, 1b. Preferably the angle between the first or the second plate section 1a, 1b and the edging 1c, 1d, 1e, If is 75-89°. The edgings 1c, 1d, 1e, 1f thus work as springs, which clamp the sealing element 1, 1' to the insulation panels 2. This reduces heat leakages, but also helps in the assembly of the insulation panels 2. The edgings 1c, 1c, 1e, 1f extend over the whole length of the sealing element 1, 1'.

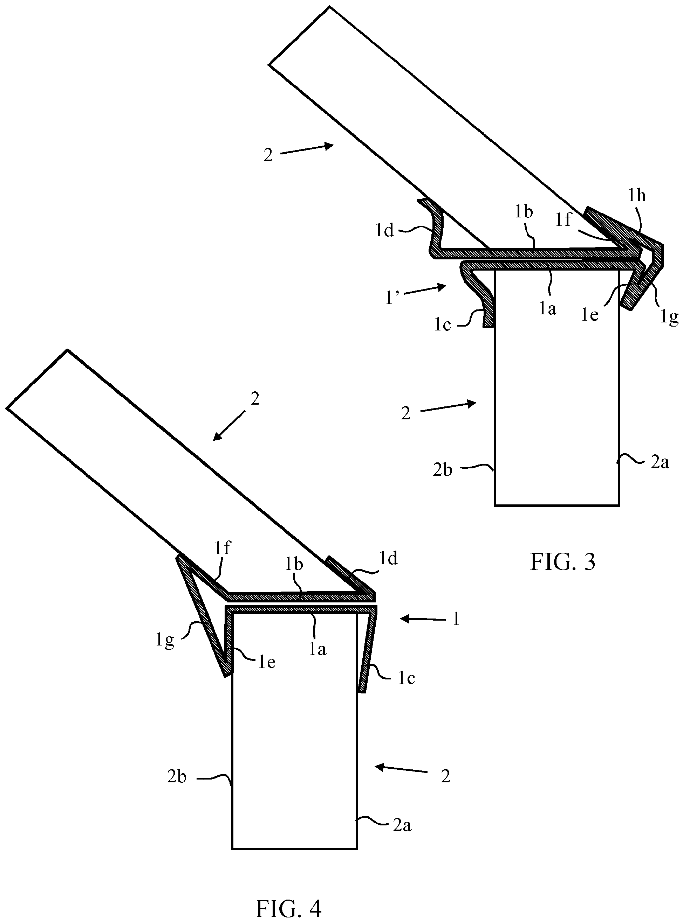

In figures 3 and 4 are shown sealing elements 1, 1' for insulation panels 2 that are in some other angle than 90° or 180° in relation to each other. The sealing elements 1' of figures 3 and 4 are similar to the sealing elements 1' of figures 1b and 1c, but the second edging Id and the fourth edging If have been adapted to the different angle between the two insulation panels 2. The embodiment of figure 3 differs from the embodiment of figure 1a in that the sealing element 1' is arranged between the insulation panels 2 different edge outwards. The first edging 1c and the second edging 1d of the sealing element 1' are thus on the same side of the insulation panels 2 as the rear plates 2b. In the embodiment of figure 3, the third edging 1e is connected to the fourth edging If with a triangle shaped bending 1g, 1h like in the embodiment of figure 1b. In the embodiment of figure 4, the third edging 1e and the fourth edging If are connected to each other with a bending 1g. In the embodiment of figures 3 and 4, only some of the edgings 1c, 1d, 1e, 1f are bent towards the longitudinal center line 4 of the first or the second plate section 1a, 1b.

The sealing elements 1, 1' according to the invention prevent effectively direct heat radiation from the insulation box and also reduce gas leakages. The sealing elements 1, 1' also guide the insulation panels 2 when the insulation box is assembled. The sealing elements 1, 1' can be used in many existing insulation box designs as retrofit parts. The sealing elements 1, 1' can be manufactured in continuous lengths and cut to appropriate pieces according to the need.

It will be appreciated by a person skilled in the art that the invention is not limited to the embodiments described above, but may vary within the scope of the appended claims. For instance, the use of the sealing elements is not limited to insulation boxes, but the sealing elements can also be used in other applications.

## Claims

1. A sealing element (1, 1') for preventing heat radiation through gaps between heat insulation panels (2), which sealing element (1, 1') is made of a single piece of metal or metal alloy, wherein the sealing element (1, 1') comprises
- a first elongated plate section (1a) having a longitudinal direction and a first edge and a second edge, said first and second edges extending in said longitudinal direction,
- a second elongated plate section (1b) facing the first plate section (1a) and having a longitudinal direction parallel to the longitudinal direction of the first elongated plate section (1a) and a first edge and a second edge, said first and second edges extending in said longitudinal direction,
- a first edging (1c) that is arranged on the first edge of the first plate section (1a) and points away from the second plate section (1b),
- a second edging (1d) that is arranged on the first edge of the second plate section (1b) and points away from the first plate section (1a), and
- a third edging (1e) that is arranged on the second edge of the first plate section (1a) on the same side as the first edging (1c) and points away from the second plate section (1b),
the second edge of the second plate section (1b) being connected to the second edge of the first plate section (1a) via the third edging (1e), and the edgings (1c, 1d, 1e) being configured to work as springs that clamp the sealing element (1, 1) to an insulation panel (2),
**characterized in that** at least the first edging (1c) and the second edging (1d) are inclined towards a longitudinal center line (4) of the first or the second plate section (1a, 1b) that extends in the longitudinal direction.

2. A sealing element (1, 1') according to claim 1, **characterized in that** the sealing element (1, 1') comprises a fourth edging (1f) that is arranged on a second edge of the second plate section (1b) on the same side as the second edging (1d).

3. A sealing element (1, 1') according to any of the preceding claims, **characterized in that** the edgings (1c, 1d, 1e, 1f) extend over the whole length of the sealing element (1, 1').

4. A sealing element (1, 1') according to any of the preceding claims, **characterized in that** the sealing element (1, 1') is made of a single metal sheet.

5. A heat insulation box for an internal combustion engine or for a part of the exhaust system of such engine, which insulation box comprises a plurality of heat insulation panels (2) and joints between adjacent insulation panels (2), **characterized in that** at least part of the joints between adjacent insulation panels (2) are provided with a sealing element (1, 1') according to any of claims 1-4.

6. A heat insulation box according to claim 5, **characterized in that** at least part of the joints between adjacent insulation panels (2) are secured with screws or bolts (3).

## Patentansprüche

1. Dichtelement (1, 1') zur Verhinderung von Wärmeabstrahlung durch Spalte zwischen Wärmeisolierplatten (2), wobei das Dichtelement (1, 1') aus einem einzigen Stück Metall oder Metalllegierung besteht, wobei das Dichtelement (1, 1') Folgendes umfasst
- einen ersten langgestreckten Plattenabschnitt (1a) mit einer Längsrichtung und einem ersten Rand und einem zweiten Rand, wobei sich der erste und der zweite Rand in der Längsrichtung erstrecken,
- einen zweiten langgestreckten Plattenabschnitt (1b), der dem ersten Plattenabschnitt (1a) zugewandt ist und eine Längsrichtung parallel zur Längsrichtung des ersten langgestreckten Plattenabschnitts (1a) und eine erste Kante und eine zweite Kante aufweist, wobei sich die erste und die zweite Kante in der Längsrichtung erstrecken,
- eine erste Umrandung (1c), die an der ersten Kante des ersten Plattenabschnitts (1a) angeordnet ist und von dem zweiten Plattenabschnitt (1b) wegweist,
- eine zweite Umrandung (1d), die an der ersten Kante des zweiten Plattenabschnitts (1b) angeordnet ist und von dem ersten Plattenabschnitt (1a) wegweist, und
- eine dritte Umrandung (1e), die an der zweiten Kante des ersten Plattenabschnitts (1a) auf der gleichen Seite wie die erste Umrandung (1c) angeordnet ist und von dem zweiten Plattenabschnitt (1b) wegweist,
wobei die zweite Kante des zweiten Plattenabschnitts (1b) über die dritte Kante (1e) mit der zweiten Kante des ersten Plattenabschnitts (1a) verbunden ist und die Umrandungen (1c, 1d, 1e) so konfiguriert sind, dass sie als Federn wirken, die das Dichtelement (1, 1) an einer Isolierplatte (2) festklemmen,
**dadurch gekennzeichnet, dass** zumindest die erste Umrandung (1c) und die zweite Umrandung (1d) zu einer sich in Längsrichtung erstreckenden Längsmittellinie (4) des ersten bzw. des zweiten Plattenabschnitts (1a, 1b) geneigt sind.

2. Dichtelement (1, 1") nach Anspruch 1, **dadurch gekennzeichnet, dass** das Dichtelement (1, 1') eine vierte Umrandung (1f) aufweist, die an einer zweiten Kante des zweiten Plattenabschnitts (1b) auf der gleichen Seite wie die zweite Kante (1d) angeordnet ist.

3. Dichtelement (1, 1') nach einem der vorhergehenden Ansprüche, **dadurch gekennzeichnet, dass** sich die Umrandungen (1c, 1d, 1e, 1f) über die gesamte Länge des Dichtelements (1, 1') erstrecken.

4. Dichtelement (1, 1') nach einem der vorhergehenden Ansprüche, **dadurch gekennzeichnet, dass** das Dichtelement (1, 1') aus einem einzigen Blech besteht.

5. Wärmeisolierbox für einen Verbrennungsmotor oder für einen Teil des Abgassystems eines solchen Motors, wobei die Wärmeisolierbox aus mehreren Wärmeisolierplatten (2) und Fugen zwischen benachbarten Isolierplatten (2) besteht,
**dadurch gekennzeichnet, dass** zumindest ein Teil der Fugen zwischen benachbarten Isolierplatten (2) mit einem Dichtungselement (1, 1') nach einem der Ansprüche 1 bis 4 versehen sind.

6. Wärmeisolierbox nach Anspruch 5, **dadurch gekennzeichnet, dass** zumindest ein Teil der Fugen zwischen benachbarten Isolierplatten (2) mit Schrauben oder Bolzen (3) gesichert sind.

## Revendications

1. Elément d'étanchéité (1, 1') pour empêcher un rayonnement thermique à travers des espaces entre des panneaux d'isolation thermique (2), lequel élément d'étanchéité (1, 1') est constitué d'une seule pièce de métal ou d'alliage métallique, dans lequel l'élément d'étanchéité (1, 1') comprend
- une première section de plaque allongée (1a) ayant une direction longitudinale et un premier bord et un second bord, lesdits premier et second bords s'étendant dans ladite direction longitudinale,
- une seconde section de plaque allongée (1b) faisant face à la première section de plaque (1a) et ayant une direction longitudinale parallèle à la direction longitudinale de la première section de plaque allongée (1a) et un premier bord et un second bord, lesdits premier et second bords s'étendant dans ladite direction longitudinale,
- une première bordure (1e) qui est agencée sur le premier bord de la première section de plaque (1a) et s'éloigne de la seconde section de plaque (1b),
- une deuxième bordure (1d) qui est agencée sur le premier bord de la seconde section de plaque (1b) et s'éloigne de la première section de plaque (la), et
- une troisième bordure (1e) qui est agencée sur le second bord de la première section de plaque (la) sur le même côté que la première bordure (1c) et s'éloigne de la seconde section de plaque (1b),
le second bord de la seconde section de plaque (1b) étant relié au second bord de la première section de plaque (1a) via la troisième bordure (le), et les bordures (1c, 1d, 1e) étant configurées pour fonctionner comme des ressorts qui serrent l'élément d'étanchéité (1, 1) sur un panneau isolant (2),
**caractérisé en ce qu'**au moins la première bordure (1c) et la deuxième bordure (1d) sont inclinées vers une ligne médiane longitudinale (4) de la première ou de la seconde section de plaque (1a, 1b) qui s'étend dans la direction longitudinale.

2. Elément d'étanchéité (1, 1') selon la revendication 1, **caractérisé en ce que** l'élément d'étanchéité (1, 1') comprend une quatrième bordure (1f) qui est agencée sur un second bord de la seconde section de plaque (1b) sur le même côté que la deuxième bordure (1d).

3. Elément d'étanchéité (1, 1') selon l'une quelconque des revendications précédentes, **caractérisé en ce que** les bordures (1c, 1d, le, 1f) s'étendent sur toute la longueur de l'élément d'étanchéité (1, 1').

4. Elément d'étanchéité (1, 1') selon l'une quelconque des revendications précédentes, **caractérisé en ce que** l'élément d'étanchéité (1, 1') est constitué d'une seule tôle métallique.

5. Boîtier d'isolation thermique pour un moteur à combustion interne ou pour une partie du système d'échappement d'un tel moteur, lequel boîtier d'isolation comprend une pluralité de panneaux d'isolation thermique (2) et des joints entre des panneaux d'isolation (2) adjacents,
**caractérisé en ce qu'**au moins une partie des joints entre des panneaux isolants (2) adjacents sont pourvus d'un élément d'étanchéité (1, 1') selon l'une quelconque des revendications 1 à 4.

6. Boîtier d'isolation thermique selon la revendication 5, **caractérisé en ce qu'**au moins une partie des joints entre des panneaux isolants (2) adjacents sont fixés avec des vis ou des boulons (3).
